# EUROPEAN PATENT APPLICATION

(11) **EP 2 450 909 A1**
(43) Date of publication of application: **09.05.2012**
(21) Application number: 11008170.0
(22) Date of filing: 10.10.2011
(51) Int. Cl.: H01B 1/24, C09D 11/00

(54) **Conductive ink, method of preparing the same, and method of preparing transparent conductive film**

(30) Priority: 04.11.2010 JP 2010247266
(71) Applicant: Sony Corporation, Tokyo 108-0075 (JP)
(72) Inventor: Kadono, Koji, Tokyo, 108-0075 (JP)
(74) Representative: Müller - Hoffmann & Partner

(57) **Abstract**

A conductive ink includes carbon nanotubes, ionic liquid, and a solvent, wherein the viscosity of the ink is 0.01 Pa · s to 10000 Pa · s.

## Description

### BACKGROUND

The present disclosure relates to a conductive ink, a method of preparing the same, and a method of preparing a transparent conductive film. The present disclosure is suitable for being applied to the preparation of transparent conductive film which is used for a touch panel, a display, and a solar cell, for example.

A transparent conductive film is a constituent material indispensible to various types of electronic devices and electronic elements such as a touch panel, a display, and a solar cell. Currently, the transparent conductive film is mass-produced by sputtering of a target of a metal oxide represented by indium tin oxide (ITO) in a vacuum device (see "NIKKEI ELECTRONICS" 30 November, 2009 and Web searched on 25 March, 2010, for example). However, sputtering the target including indium, which is a rare metal, in the vacuum device in which a high degree of airtightness is necessary has a problem in that costs are high and the throughput is low.

Therefore, in recent years, as a method for replacing the sputtering method, the development of a technique of preparing the transparent conductive film thorough a printing process using silver ink has advanced (see Japanese Unexamined Patent Application Publication No. 2003-151361 and Web searched on 25 March, 2010). In this method, the vacuum device is not necessary, the film is directly patterned during film formation, and the utilization of introduced materials is high. Consequently, this method is expected to reduce costs of the film formation process and to increase throughput. However, being a metal, silver not only shows a high reflectance but is prone to cause electromigration; therefore, silver has a problem in reliability. As a result, it is necessary to make the film thickness large when the transparent conductive film is prepared using silver ink, which causes the deterioration of transparency, hence the mass-production of the transparent conductive film is not achievable at the present stage. To resolve the above problems, the development of a highly dispersed ink using silver nanoparticles has been advanced, but an ink which sufficiently satisfies the reliability, transparency, or the like has not been obtained.

In recent years, a technique of preparing a conductive film by using a carbon nanotube which is a nanomaterial having a high conductivity has been proposed (see International Publication No. WO 2006/126604). There is also a report regarding a technique of preparing an ink by dispersing the carbon nanotube in a proper solvent. However, if printing is performed using the carbon nanotube ink in the related art, it is difficult to obtain sufficient pattern characteristics due to bleeding and drying occurring during printing.

Meanwhile, in recent years, there has been a report reporting that a mixture of the carbon nanotube and ionic liquid becomes a gel-like composition (see Japanese Unexamined Patent Application Publication No. 2004-142972). This type of gel has very high viscosity and non-volatility, and can be expected to be used for preparing a conductive material obtained by injection molding or the like. On the other hand, being in a gel-like state, this composition is not an ink that can be applied to printing and the transfer process using an ink jet and a plate.

In addition, a transparent conductive material containing fine conductive particles, ionic liquid, and an organic resin has been proposed (see Japanese Unexamined Patent Application Publication No. 2008-269963). However, the ionic liquid and the organic resin itself in the transparent conductive material do not have electric conductivity, which causes the deterioration of transparent conductive characteristics. Moreover, there has been no report reporting that the transparent conductive material improves printing process suitability, and a problem in that the material has high viscosity and non-volatility similarly to the composition described above remains.

### SUMMARY

For the reasons described above, a conductive ink which is excellent in both printing process suitability and conductivity is desired, but such a conductive ink has not been proposed.

It is desirable to provide a conductive ink which has high printing process suitability and can easily allow preparation of a transparent conductive film having high conductivity by a printing process.

It is desirable to provide a method of preparing a conductive ink which has high printing process suitability and can easily prepare a transparent conductive film having high conductivity by a printing process.

It is also desirable to provide a method of preparing a transparent conductive film that can easily prepare a transparent conductive film having high conductivity by using the excellent conductive ink as described above.

The above-described desired points will be clarified by the description of the present specification.

Various respective aspects and features of the invention are defined in the appended claims.

According to an embodiment of the present disclosure, there is provided a conductive ink including carbon nanotubes, ionic liquid, and a solvent, wherein the viscosity of the ink is 0.01 Pa · s to 10000 Pa · s.

According to another embodiment of the present disclosure, there is provided a method of preparing a conductive ink, including preparing a dispersion obtained by dispersing carbon nanotubes in a solvent, and adjusting the viscosity to be 0.01 Pa · s to 10000 Pa · s by adding at least ionic liquid to the dispersion and stirring the dispersion.

According to still another embodiment of the present disclosure, there is provided a method of preparing a conductive ink, including adding carbon nanotubes to ionic liquid, obtaining a paste-like substance by grinding the ionic liquid to which the carbon nanotubes have been added, separating the paste-like substance into a gel-like composition formed of the ionic liquid including the carbon nanotubes and the ionic liquid by performing centrifugation on the paste-like substance, and adjusting the viscosity to be 0.01 Pa · s to 10000 Pa · s by adding a solvent to the gel-like substance and stirring the substance.

According to still another embodiment of the present disclosure, there is provided a method of preparing a transparent conductive film, including printing a conductive ink which includes carbon nanotubes, ionic liquid, and a solvent and has a viscosity of 0.01 Pa · s to 10000 Pa · s on a substrate.

As the ionic liquid included in the conductive ink, it is possible to optionally select and use the one in the related art. As the ionic liquid, one in which a cation portion interacts with n electrons of the carbon nanotubes is preferably used. As the solvent included in the conductive ink, although it is possible to optionally select and use the one in the related art, an organic solvent and/or water are/is preferably used. As the organic solvent, for example, an organic solvent having at least one of an amino group, an amide group, a sufone group, a carboxyl group, and a hydroxyl group in a side chain thereof is preferably used. As the most preferable organic solvent, a water-soluble organic solvent is used. As the water-soluble organic solvent, alcohols are preferably used, and specifically, ethanol, isopropyl alcohol, ethylene glycol, glycerin, and the like as well as a higher alcohol such as an oleyl alcohol, and the like are used, for example. It is possible to optionally select the concentration of the carbon nanotubes included in the conductive ink, but the concentration is typically 10 g/L. It is possible to optionally select a volume ratio of the ionic liquid to the solvent in the conductive ink, but the ratio is 0.01 to 30, preferably 0.01 to 10, more preferably 0.5 to 2. The viscosity of the conductive ink is preferably 0.01 Pa · s to 10000 Pa · s in a range of a shear rate of 0.01 rpm to 1000 rpm, and more preferably 0.1 Pa · s to 100 Pa · s in a range of a shear rate of 0.1 rpm to 100 rpm. A thixotropy index value (TI value) of the conductive ink is preferably 1 to 10, and more preferably 4 to 8, in terms of a ratio of the viscosity at a shear rate of 0.5 rpm to the viscosity at a shear ratio of 5 rpm.

Optionally, the conductive ink may further include at least 1 or more kinds among a surfactant and a conductive polymer. When alcohol is not used as the solvent, the conductive ink may further include at least 1 or more kinds among a surfactant, a conductive polymer, and alcohol. As the surfactant, any one of various types of anionic surfactants, cationic surfactants, amphoteric surfactants, and nonionic surfactants in the related art may be used, and 2 or more kinds of these surfactants may be used in combination. As the conductive polymer, it is possible to optionally select and use various types of polymers in the related art. The conductive polymer is roughly divided into hydrocarbon-based polymers and hetero atom-containing polymers. The alcohol may be a monol or a polyol such as a diol, or may be any one of a primary alcohol, a secondary alcohol, and a tertiary alcohol. The alcohol is selected appropriately from these alcohols.

In the present disclosure configured in the above-described manner, the conductive ink can secure high conductivity through the carbon nanotubes. In addition, since the viscosity of the conductive ink is 0.01 Pa · s to 10000 Pa · s, the conductive ink has printing process suitability with respect to various types of printing methods. Moreover, since volatility can be reduced by the selection of a mixing ratio of the ionic liquid and the solvent other than the carbon nanotubes in the conductive ink, it is possible to prevent bleeding or drying during printing. In this sense, the conductive ink also has printing process suitability. Furthermore, the use of the conductive ink having appropriate viscosity and volatility makes it possible to prevent scattering of the carbon nanotubes.

According to the embodiments of the present disclosure, it is possible to obtain a conductive ink which has printing process suitability and can easily prepare a transparent conductive film having high conductivity by a printing process. In addition, it is possible to easily prepare such an excellent conductive ink. It is also possible to easily prepare a transparent conductive film having high conductivity by using the excellent conductive ink, and to obtain high performance electronic devices or electronic elements by using the transparent conductive film as a transparent film of the electronic devices, electronic elements, and the like.

### BRIEF DESCRIPTION OF THE DRAWINGS

Fig. 1 is a schematic view showing a relationship between a volume ratio of ionic liquid to a solvent in the conductive ink prepared in Example 3 of an embodiment of the present disclosure and viscosity of the conductive ink; and
Fig. 2 is a photograph substituting a drawing showing an atomic force microphotograph of a transparent conductive film prepared using the conductive ink in Example 6 of an embodiment of the present disclosure.

### DETAILED DESCRIPTION OF EMBODIMENTS

Hereinafter, embodiments of the present disclosure (referred to as "embodiments" hereinafter) will be described. The embodiments will be described in the following order.
1. First embodiment (conductive ink and method of preparing the same)
2. Second embodiment (method of preparing transparent conductive film)

### <1. First embodiment>

### [Conductive Ink]

The conductive ink according to a first embodiment includes carbon nanotubes, ionic liquid, and a solvent, and the viscosity of the ink is 0.1 Pa · s to 10000 Pa · s, and typically 0.4 Pa · s to 200 Pa · s, for example.

The carbon nanotubes may be monolayer carbon nanotubes or multilayer carbon nanotubes, and the diameter and length of the carbon nanotubes are not particularly limited. Basically, the carbon nanotubes may be synthesized by any method, but specifically, the carbon nanotubes can be synthesized by a laser ablation method, an electric arc discharge method, a chemical vapor deposition (CVD) method, and the like.

As the ionic liquid, those in the related art can be used, but preferably, one in which a cation portion interacts with n electrons of the carbon nanotubes is preferably used. Specific examples of the ionic liquid are as follows.
· EMI-BF₄: 1-ethyl-3-methylimidazolium tetrafluoroborate
· DEME-BF₄: N,N-diethyl-N-methyl-N-(2-methoxyethyl)ammonium tetrafluoroborate
· EMI-TCB: 1-ethyl-3-methylimidazolium tetracyanoborate
· EMI-TFSI: 1-ethyl-3-methylimidazolium bis(trifluoromethanesulfone)imide
· EMI-FAP: 1-ethyl-3-methylimidazolium tris(pentafluoroethyl) trifluorophosphate
· EMI-OTf(1-ethyl-3-methylimidazolium trifluoromethanesulfonate)
· P₂₂₂MOMTFSI(triethyl(methoxymethyl)phosphonium bis(trifluoromethylsulfonyl)imide)

Among the above ionic liquids, EMI-BF₄ and DEME-BF₄ are suitable. This is because these ionic liquids can be used as the solvent of the conductive ink since the ionic liquids are water-soluble, have high ionic conductivity, and cause dispersion and gelation of the carbon nanotubes by the cation-π interaction. For example, a cation portion of DEMEBF₄ is as follows.

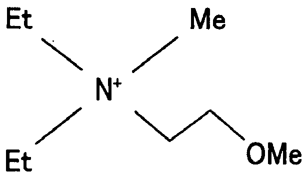

As the solvent, the ones in the related art can be used, and preferably, an organic solvent having at least one of an amine groups, an amide group, a sulfone group, a carboxyl group, and a hydroxyl group in a side chain thereof is used. Particularly, a water-soluble organic solvent or water is used as the solvent.

The respective compositions of the carbon nanotubes, ionic liquid, and solvent included in the conductive ink are appropriately selected so that the desired conductivity can be obtained and that the viscosity becomes 0.01 Pa · s to 10000 Pa · s. The concentration of the carbon nanotubes in the conductive ink is typically 10 g/L or lower. The volume ratio of the ionic liquid to the solvent in the conductive ink is preferably 0.01 to 10.

The conductive ink may optionally further include at least one or more kinds among a surfactant, a conductive polymer, and alcohol. Specific examples of the surfactant are as follows. Examples of anionic surfactants include C₈H₁₇SO₃⁻Na⁺, C₁₀H₂₁SO₃⁻Na⁺, C₁₂H₂₅SO₃⁻Na⁺, C₁₄H₂₉SO₃⁻Na⁺, C₁₆H₃₃SO₃⁻Na⁺, C₈H₁₇SO₄⁻Na⁺, C₁₀H₂₁SO₄⁻Na⁺, C₁₁H₂₃SO₄⁻Na⁺, C₁₂H₂₅SO₄⁻Na⁺, C₁₂H₂₅SO₄⁻Li⁺, C₁₂H₂₅SO₄⁻K⁺, (C₁₂H₂₅SO₄⁻)₂Ca²⁺, C₁₂H₂₅SO₄⁻N(CH₃)₄⁺, C₁₂H₂₅SO₄⁻N(C₂H₅)₄⁺, C₁₂H₂₅SO₄⁻N(C₄H₉)₄⁺, C₁₃H₂₇SO₄⁻Na⁺, C₁₄H₂₉SO₄⁻Na⁺, C₁₅H₃₁SO₄⁻Na⁺, C₁₆H₃₃SO₄⁻Na⁺, C₁₂H₂₅CH(SO₄⁻Na⁺)C₃H₇, C₁₀H₂₁CH(SO₄⁻Na⁺)C₅H₁₁, C₁₃H₂₇CH(CH₃)CH₂SO₄⁻Na⁺, C₁₂H₂₅CH(C₂H₅)CH₂SO₄⁻Na⁺, C₁₁H₂₃CH(C₃H₇)CH₂SO₄⁻Na⁺, C₁₀H₂₁CH(C₄H₉)CH₂SO₄⁻Na⁺, C₁₂H₂₅OC₂H₄SO₄⁻Na⁺, C₁₂H₂₅(OC₂H₄)₂SO₄⁻Na⁺, C₁₂H₂₅(OC₂H₄)₄SO₄⁻Na⁺, C₈H₁₇OOC(CH₂)₂SO₃⁻Na⁺, C₁₀H₂₁OOC(CH₂)₂SO₃⁻Na⁺, C₁₂H₂₅OOC(CH₂)₂SO₃⁻Na⁺, C₁₄H₂₉OOC(CH₂)₂SO₃⁻Na⁺, p-n-C₈H₁₇C₆H₄SO₃⁻Na⁺, p-n-C₁₀H₂₁C₆H₄SO₃-Na⁺, p-n-C₁₂H₂₅C₆H₄SO₃⁻Na⁺, C₇F₁₅COO⁻K⁺, C₇F₁₅COO⁻Na⁺, (CF₃)₂CF(CF₂)₄COO⁻Na⁺,n-C₈F₁₇SO₃⁻Li⁺, and the like. Examples of cationic surfactants include C₈H₁₇N(CH₃)₃Br⁻, C₁₀H₂₁N(CH₃)₃Br⁻, C₁₂H₂₅N(CH₃)₃Br⁻, C₁₄H₂₉N(CH₃)₃Br⁻, C₁₆H₃₃N(CH₃)₃Br⁻, C₁₂H₂₅Pyr⁺Br⁻, C₁₂H₂₅Pyr⁺Cl⁻, C₁₂H₂₅Pyr⁺Cl⁻, C₁₆H₃₃Pyr⁺Cl⁻, C₁₂H₂₅N⁺(C₂H₅)(CH₃)₂Br⁻, C₁₂H₂₅N⁺(C₈H₁₇)(CH₃) ₂Br⁻, C₁₄H₂₉N⁺(C₂H₅)₃Br⁻, C₁₉H₂₉N⁺(C₄H₉)₃Br⁻, and the like. Examples of amphoteric surfactants include C₈H₁₇N⁺(CH₃)₂CH₂COO⁻, C₁₀H₂₁N⁺(CH₃)₂CH₂COO⁻, C₁₂H₂₅N⁺(CH₃)₂CH₂COO⁻, C₁₉H₂₉N⁺(CH₃)₂CH₂COO⁻, C₁₆H₃₃N⁺(CH₃)₂CH₂COO⁻, C₁₀H₂₁CH(Pyr⁺)COO⁻, C₁₄H₂₉CH(Pyr⁺)COO⁻, and the like. Examples of nonionic surfactants include C₈H₁₇CHOHCH₂OH, C₁₂H₂₅CHOHCH₂CH₂OH, C₈H₁₇(OC₂H₄)₃OH, C₁₀H₂₁(OC₂H₄)₄OH, C₁₁H₂₃(OC₂H₄)₈OH, C₁₂H₂₅(OC₂H₄)₂OH, C₁₂H₂₅(OC₂H₄)₄OH, C₁₂H₂₅(OC₂H₄)₆OH, C₁₂H₂₅(OC₂H₄)₈OH, C₁₃H₂₇(OC₂H₄)₈OH, C₁₄H₂₉(OC₂H₉) ₈OH, C₁₅H₃₁(OC₂H₄)₈OH, P-t-C₈H₁₇C₆H₄O(C₂H₄O)₂H, p-t-C₈H₁₇C₆H₄O(C₂H₄O)₈H, n-octyl-β-D-glucoside, n-decyl-β-D-glucoside, and the like. These surfactants may optionally be used in combination of two or more kinds thereof. Among these surfactants, C₁₂H₂₅SO₄⁻Na⁺ (sodium dodecyl sulfate (SDS)) as a kind of the anionic surfactant is particularly preferable in respect that the carbon nanotubes are easily dispersed by this surfactant, but the surfactant is not limited thereto. Specific examples of the conductive polymer are as follows. Examples of a hydrocarbon-based conductive polymer include polyacetylene, polyphenylene, polyphenylene vinylene, polyacene, polyphenyl acetylene, polydiacetylene, polynaphthalene, and the like. Examples of a hetero atom-containing conductive polymer include polypyrrole, polyaniline, polythiophene, polyethylene vinylene, polyazulene, polyisothianaphthene, and the like. Specific examples of an alcohol include methyl alcohol (methanol), ethyl alcohol (ethanol), propyl alcohol (propanol), butyl alcohol (butanol), pentyl alcohol (pentanol), ethylene glycol, and the like.

### [Method of Preparing Conductive Ink]

The method of preparing the conductive ink will be described.

In a first preparation method, a dispersion is prepared by dispersing the carbon nanotubes in a solvent, and viscosity is adjusted to be 0.01 Pa · s to 10000 Pa · s by adding at least the ionic liquid to the dispersion and stirring the dispersion, whereby the conductive ink is prepared.

In a second preparation method, the carbon nanotubes are taken added to the ionic liquid, a paste-like substance is obtained by grinding the ionic liquid to which the carbon nanotubes have been added, the paste-like substance is subjected to centrifugation so as to be separated into a gel-like composition formed of the ionic liquid including the carbon nanotubes and the ionic liquid, viscosity is adjusted to be 0.01 Pa · s to 10000 Pa · s by adding a solvent to the gel-like composition and stirring the gel-like composition, whereby the conductive ink is prepared.

### <Example 1>

1. 0.1 g of carbon nanotubes (grade FH-P) manufactured by Meijo Nano Carbon were taken and added to 100 ml of a mixed solvent including water and isopropyl alcohol (mixing ratio by volume of 1:1) filled in a glass bottle.
2. The glass bottle containing the carbon nanotubes was subjected to homogenization for 10 minutes by an ultrasonic homogenizer at an output of 50 W, whereby a carbon nanotube dispersion was prepared.
3. Subsequently, the dispersion was subjected to centrifugation of 10000 G at ambient temperature, and 90 ml of supernatant liquid was recovered.
4. 90 ml of EMI-BF₄ (ionic liquid) was added to the dispersion remaining after recovery of the supernatant, and the resultant was stirred for 3 hours by a stirrer.
5. The ink obtained in this manner was allowed to stand for 30 hours.

The conductive ink was prepared as described above.

### <Example 2>

1. 0.1 g of carbon nanotubes (grade APJ) manufactured by Meijo Nano Carbon were added to 10 ml of DEME-BF₄ (ionic liquid).
2. The mixture of the carbon nanotubes and DEME-BF₄ was placed in an automatic mortar, followed by grinding for 30 minutes at ambient temperature, thereby obtaining a paste-like substance. Thereafter, this paste-like substance was subjected to centrifugation so as to be separated into a gel-like composition of the ionic liquid containing 95% by mass of fine conductive particles and transparent ionic liquid.
3. The paste-like substance was subjected to centrifugation so as to be separated into a gel-like composition of the ionic liquid containing 90% by mass of the carbon nanotubes and transparent ionic liquid.
4. 20 ml of a mixture of water and dimethylformamide (mixing ratio by volume of 1:1) was added to the gel-like composition, and the resultant was homogenized for 10 minutes by an ultrasonic homogenizer at an output of 50 W.
5. The ink obtained in this manner was allowed to stand for 30 hours.

The conductive ink was prepared as described above.

### <Example 3>

1. In the ink preparation process 4 of Example 2, the solvent to be added was changed to a mixture of water, isopropyl alcohol, and ethanol (mixing ratio by volume of 2:1:1).
2. The amount of the solvent to be added was changed to 0.5 ml, 1 ml, 2 ml, 3 ml, 5 ml, 10 ml, 50 ml, and 100 ml, thereby preparing 8 lots in total.
3. The conductive ink was prepared through processes 4 and 5 of Example 2.

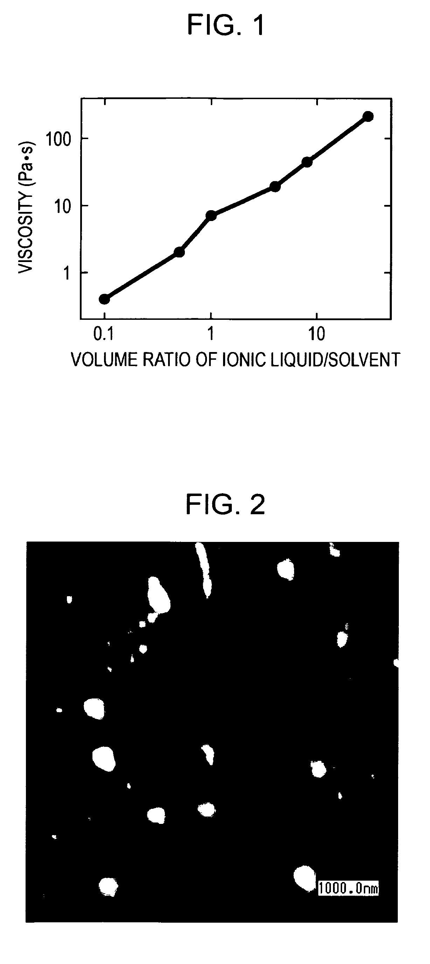

The viscosity of the conductive ink prepared in Example 3 was measured by a viscometer. The results are shown in Fig. 1. In Fig. 1, the horizontal axis represents a volume ratio of the ionic liquid to the solvent in the conductive ink, and the vertical axis represents the viscosity of the conductive ink. As shown in Fig. 1, as the volume ratio of the ionic liquid to the solvent in the conductive ink changes from 0.1 to 30, the viscosity of the conductive ink changes from 0.4 Pa · s to 200 Pa · s.

### <Example 4>

1. 0.1 g of carbon nanotubes (grade CM-95) manufactured by Iljin Nanotech Co., Ltd. were taken and added to 30 ml of DEME-BF₄ (ionic liquid).
2. The mixture of the carbon nanotubes and DEME-BF₄ was placed in an automatic mortar, followed by grinding for 30 minutes at ambient temperature, thereby obtaining a paste-like substance. Thereafter, this paste-like substance was subjected to centrifugation so as to be separated into a gel-like composition of the ionic liquid containing 95% by mass of fine conductive particles and transparent ionic liquid.
3. The paste-like substance was subjected to centrifugation so as to be separated into a gel-like composition of the ionic liquid containing 90% by mass of the carbon nanotubes and transparent ionic liquid.
4. 40 ml of a mixture of water, isopropyl alcohol and ethanol (mixing ratio by volume 1:1:1) was added to the gel-like composition, and the resultant was homogenized for 10 minutes by an ultrasonic homogenizer at an output of 50 W.
5. The ink obtained in this manner was allowed to stand for 30 hours.

The conductive ink was prepared as described above.

The viscosity of the conductive ink prepared in Example 4 was 11.2 Pa · s, and the TI value was measured to be 6.15 in terms of a ratio of viscosity at a shear rate of 0.5 rpm to viscosity at a shear rate of 5 rpm.

As described above, the conductive ink according to the first embodiment includes the carbon nanotubes, ionic liquid, and solvent, and has a viscosity of 0.01 Pa · s to 10000 Pa · s. Therefore, the conductive ink has printing process suitability in addition to high conductivity. Consequently, the use of this excellent conductive ink makes it possible to easily prepare a transparent conductive film having high conductivity through a printing process.

### <2. Second embodiment>

### [Method of Preparing Transparent Conductive Film]

In the method of preparing a transparent conductive film according to a second embodiment, the transparent conductive film is prepared using the conductive ink according to the first embodiment through a printing process.

Specifically, the conductive ink including the carbon nanotubes, ionic liquid, and solvent and having a viscosity of 0.01 Pa · s to 10000 Pa · s is printed on a substrate through a printing process, whereby the transparent conductive film is prepared.

Various types of substrates may be used, and it is possible to optionally select the substrate. Specifically, as the substrate, glass, quartz, silicon (particularly, one having an oxidized layer formed on the surface thereof), and the like can be used. As a flexible substrate, various types of plastic substrates can be used. As the plastic substrate, for example, a substrate formed of polyethylene terephthalate, polyethylene, polypropylene, polystyrene, polycarbonate and the like can be used, but the substrate is not limited thereto. As a transparent plastic substrate, a substrate formed of polycarbonate and the like can be used. The printing method is not particularly limited, and for example, gravure printing, flexo printing, lithography, convex plate printing, offset printing, concave plate printing, rubber plate printing, screen printing, and the like can be used.

### <Example 5>

1. The conductive ink prepared in Example 1 was applied to a concave base board designed with lines and spaces of 50 µm, and surplus ink was removed using a stainless steel blade.
2. The concave plate was imprinted to a roll-type blanket, thereby transferring the ink to the blanket.
3. The blanket having the pattern of the ink was imprinted to polyethylene terephthalate base board in a roll method, thereby forming a transparent conductive film having lines and spaces of about 50 µm on the substrate.
4. The resultant was naturally dried for 10 minutes, and then the base board was washed with pure water for 3 minutes.

The light transparency in a visible light region and a sheet resistance value of the transparent conductive film obtained in this manner were measured. The results are shown in Table.

**Table**

| Volume ratio of ionic liquid/solvent | Sheet resistance | Transmissivity | Film thickness |
|---|---|---|---|
| 1 | 180 Ω/square | 87% | 100 µm |

As shown in Table, the obtained transparent conductive film has a film thickness of 100 nm, sheet resistance of 180 Ω/square, and transmissivity with respect to a wavelength of 550 nm of 87%, which shows that a transparent conductive film which is excellent in transparent conductive characteristics has been obtained.

### <Example 6>

1. The conductive ink prepared in Example 2 was applied to an anilox roll made with stainless steel and transferred to a convex base board designed with lines and spaces of 100 µm in a roll method.
2. The conductive ink was imprinted in a roll method to a polyethylene terephthalate base board from the convex base board to which the conductive ink had been transferred, thereby forming a transparent conductive film having lines and spaces of about 100 µm.
3. The resultant was naturally dried for 10 minutes, and then the base board was washed with pure water for 3 minutes.

The transparent conductive film obtained in this manner was observed with an atomic force microscope (AFM). The captured ATM image is shown in Fig. 2. As shown in Fig. 2, a dense network structure of the carbon nanotubes was observed, and high conductivity was obtained by the structure.

### <Example 7>

1. The conductive ink prepared in Example 4 was applied to a concave plate pattern made with glass in which lines and spaces of 100 µm had been drawn, by using a squeegee made with stainless steel.
2. A polyethylene terephthalate base board was fixed to an opposing roll, and this base board was brought into contact with the concave plate pattern at a rate of 5 rpm, thereby forming a transparent conductive film having lines and spaces of about 100 µm on the base board.
3. The resultant was naturally dried for 10 minutes, and then the base board was washed with pure water for 3 minutes.

The light transparency in a visible light region of the transparent conductive film obtained in this manner was measured, and as a result, the transmissivity with respect to a wavelength of 550 nm was 90.5%.

According to the second embodiment, printing the conductive ink according to the first embodiment on a base board makes it possible to easily prepare a transparent conductive film which is excellent in transparent conductive characteristics. This transparent conductive film can be used for various types of electronic devices or electronic elements. All electronic devices or electronic elements are included in the electronic devices or electronic elements as long as the devices and elements use the transparent conductive film, regardless of purposes and functions of the devices and elements. Specific examples of the electronic devices and electronic elements include a touch panel, a display, a solar cell, a photoelectric conversion element, a field effect transistor (FET) (such as a thin film transistor (TFT)), a molecular sensor, and the like, but the devices and elements are not limited thereto.

Hitherto, the embodiments and examples of the present disclosure have been described in detail, but the present disclosure is not limited to the embodiments and examples. Various types of modification can be made based on the technical scope of the present disclosure.

For example, the numerical values, structures, configurations, shapes, materials, and the like exemplified in the embodiments and examples are just examples, and other numerical values, structures, configurations, shapes, materials, and the like may be optionally used.

The present disclosure contains subject matter related to that disclosed in Japanese Priority Patent Application JP 2010-247266 filed in the Japan Patent Office on November 4, 2010, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

Support for the claims and further embodiments are defined in the following itemized list:
1. A conductive ink comprising:
   carbon nanotubes;
   ionic liquid; and
   a solvent,
   wherein viscosity of the ink is 0.01 Pa · s to 10000 Pa · s.
2. The conductive ink according to item 1, wherein in the ionic liquid, a cation portion interacts with n electrons of the carbon nanotubes.
3. The conductive ink according to item 2, wherein the solvent is an organic solvent and/or water.
4. The conductive ink according to item 3, wherein the organic solvent has at least one of an amine group, an amide group, a sulfone group, a carboxyl group, and a hydroxyl group in a side chain thereof.
5. The conductive ink according to item 4, wherein the concentration of the carbon nanotubes is 10 g/L or lower.
6. The conductive ink according to item 5, wherein a volume ratio of the ionic liquid to the solvent is 0.01 to 30.
7. The conductive ink according to item 6, further comprising at least one or more kinds among a surfactant, a conductive polymer, and alcohol.
8. The conductive ink according to item 1, wherein the viscosity in a range of a shear rate of 0.01 rpm to 1000 rpm is 0.01 Pa · s to 10000 Pa · s.
9. The conductive ink according to item 1, wherein a thixotropy index value is 1 to 10 in terms of a ratio of viscosity at a shear rate of 0.5 rpm to viscosity at a shear rate of 5 rpm.
10. A method of preparing a conductive ink, comprising:
   preparing a dispersion obtained by dispersing carbon nanotubes in a solvent; and
   adjusting the viscosity to be 0.01 Pa · s to 10000 Pa · s by adding ionic liquid to the dispersion and stirring the dispersion.
11. The method of preparing a conductive ink according to item 10, wherein in the ionic liquid, a cation portion interacts with n electrons of the carbon nanotubes.
12. The method of preparing a conductive ink according to item 11, wherein the solvent is an organic solvent and/or water.
13. The method of preparing a conductive ink according to item 12, wherein the concentration of the carbon nanotubes in the conductive ink is 10 g/L or lower.
14. The method of preparing a conductive ink according to item 13, wherein a volume ratio of the ionic liquid to the solvent is 0.01 to 30.
15. A method of preparing a conductive ink comprising:
   adding carbon nanotubes to ionic liquid;
   obtaining a paste-like substance by grinding the ionic liquid to which the carbon nanotubes have been added;
   separating the paste-like substance into a gel-like composition formed of the ionic liquid including the carbon nanotubes and the ionic liquid by performing centrifugation on the paste-like substance; and
   adjusting the viscosity to be 0.01 Pa · s to 10000 Pa · s by adding a solvent to the composition and stirring the gel-like composition.
16. The method of preparing a conductive ink according to item 15, wherein in the ionic liquid, a cation portion interacts with π electrons of the carbon nanotubes.
17. The method of preparing a conductive ink according to item 16, wherein the solvent is an organic solvent and/or water.
18. The method of preparing a conductive ink according to item 17, wherein the organic solvent has at least one of an amine group, an amide group, a sulfone group, a carboxyl group, and a hydroxyl group in a side chain thereof.
19. A method of preparing a transparent conductive film, comprising:
   printing a conductive ink which includes carbon nanotubes, ionic liquid, and a solvent and has a viscosity of 0.01 Pa · s to 10000 Pa · s on a substrate.
20. The method of preparing a transparent conductive film according to item 19, wherein in the ionic liquid, a cation portion interacts with n electrons of the carbon nanotubes.

## Claims

1. A conductive ink comprising:
carbon nanotubes;
ionic liquid; and
a solvent,
wherein viscosity of the ink is 0.01 Pa · s to 10000 Pa · s.

2. The conductive ink according to Claim 1,
wherein in the ionic liquid, a cation portion interacts with n electrons of the carbon nanotubes.

3. The conductive ink according to Claim 1 or 2,
wherein the solvent is an organic solvent and/or water.

4. The conductive ink according to Claim 3,
wherein the organic solvent has at least one of an amine group, an amide group, a sulfone group, a carboxyl group, and a hydroxyl group in a side chain thereof.

5. The conductive ink according to Claim 4,
wherein the concentration of the carbon nanotubes is 10 g/L or lower.

6. The conductive ink according to Claim 5,
wherein a volume ratio of the ionic liquid to the solvent is 0.01 to 30.

7. The conductive ink according to anyone of claims 1 to 6, further comprising at least one or more kinds among a surfactant, a conductive polymer, and alcohol.

8. The conductive ink according to anyone of claims 1 to 7,
wherein the viscosity in a range of a shear rate of 0.01 rpm to 1000 rpm is 0.01 Pa · s to 10000 Pa · s.

9. The conductive ink according to anyone of claims 1 to 8, wherein a thixotropy index value is 1 to 10 in terms of a ratio of viscosity at a shear rate of 0.5 rpm to viscosity at a shear rate of 5 rpm.

10. A method of preparing a conductive ink, comprising:
preparing a dispersion obtained by dispersing carbon nanotubes in a solvent; and
adjusting the viscosity to be 0.01 Pa · s to 10000 Pa · s by adding ionic liquid to the dispersion and stirring the dispersion.

11. A method of preparing a conductive ink comprising:
adding carbon nanotubes to ionic liquid;
obtaining a paste-like substance by grinding the ionic liquid to which the carbon nanotubes have been added;
separating the paste-like substance into a gel-like composition formed of the ionic liquid including the carbon nanotubes and the ionic liquid by performing centrifugation on the paste-like substance; and
adjusting the viscosity to be 0.01 Pa · s to 10000 Pa · s by adding a solvent to the composition and stirring the gel-like composition.

12. The method of preparing a conductive ink according to Claim 10 or 11,
wherein the solvent is an organic solvent and/or water.

13. The method of preparing a conductive ink according to Claim 12,
wherein the organic solvent has at least one of an amine group, an amide group, a sulfone group, a carboxyl group, and a hydroxyl group in a side chain thereof.

14. A method of preparing a transparent conductive film, comprising:
printing a conductive ink which includes carbon nanotubes, ionic liquid, and a solvent and has a viscosity of 0.01 Pa · s to 10000 Pa · s on a substrate.

15. The method according to anyone of claims 10 to 14, wherein in the ionic liquid, a cation portion interacts with n electrons of the carbon nanotubes.
